# EUROPEAN PATENT APPLICATION

(11) **EP 4 804 331 A2**
(43) Date of publication of application: **09.09.2026**
(21) Application number: 26185047.3
(22) Date of filing: 06.12.2022
(51) Int. Cl.: H01Q 9/04

(54) **RADAR DEVICE FOR A VEHICLE AND METHOD TO PRODUCE A RADAR DEVICE FOR A VEHICLE**

(30) Priority: 13.12.2021 DE 102021132797
(62) Document number(s) of the earlier application(s) in accordance with Art. 76 EPC: 22830740.1 / 4 449 553
(71) Applicant: Valeo Schalter und Sensoren GmbH, 74321 Bietigheim-Bissingen (DE)
(72) Inventor: Sit, Leen, 74321 Bietigheim-Bissingen (DE); Krupinski, Kevin, 74321 Bietigheim-Bissingen (DE); Ossowska, Alicja, 74321 Bietigheim-Bissingen (DE); Manchala, Sarath, 74321 Bietigheim-Bissingen (DE)
(74) Representative: Valeo Schalter und Sensoren

(57) **Abstract**

The invention is concerned with a radar device (6) for a vehicle (1), the vehicle (1) with the radar device (6) and a method to produce the radar device (6). The radar device (6) comprises at least one antenna element (9) and a cover element (8). The cover element (8) is designed to transmit electromagnetic waves emitted and/or received by the at least one antenna element (9) through the cover element (8), the at least one antenna element (9) is a planar antenna printed at least indirectly on the cover element (8). The printing of the at least one antenna element (9) on the cover element (8) is preferably performed by three-dimensional printing. The cover element (8) is preferably a radar dome and/or a vehicle component of the vehicle (1), for example, a front area component (2) and/or a rear area component, particularly a bumper (3) and/or a headlamp (4).

## Description

The invention is concerned with a radar device for a vehicle. The radar device comprises at least one antenna element and a cover element. The cover element is designed to transmit electromagnetic waves emitted and/or received by the at least one antenna element through the cover element. The invention is furthermore concerned with a vehicle comprising such a radar device and a method to produce such a radar device for a vehicle.

A vehicle can comprise a radar device as a detection system to determine a distance, an angle or a velocity of an object in the surroundings of the vehicle in relation to the radar device. The radar device typically comprises a transmitter producing electromagnetic waves in the radio or microwave domain, at least one transmitting antenna, at least one receiving antenna, a receiver and a processor. Radio waves transmitted by the radar device are reflected by the object in an environment of the vehicle. The back signal, meaning the reflected radio waves, is received by the radar device and gives information about the object's location and speed. The word "radar" is an abbreviation and stands for radio detection and ranging.

Data on the object in the environment of the vehicle provided by the radar device can be used by a driver assistance system such as a lane assistant. However, in order to provide reliable radar data for the driver assistance system, the antennas of the radar device should be arranged accurately within the vehicle so that losses in a radiation pattern of the antennas can be avoided.

US 2021/0194115 A1 discloses a radar system for detecting the surroundings of a motor vehicle. The radar system can include a plastic-based antenna having a front side facing a cover. The plastic-based antenna is produced by 3D-printing.

It is the object of the invention to provide a solution to reduce losses in a radiation pattern of antennas of a radar device for a vehicle.

The object is solved by the subject matter of the independent claims.

A first aspect of the invention relates to a radar device for a vehicle.

The invention is based on the observation that a radar device for a vehicle typically comprises a housing within which at least one receiving antenna and at least one transmitting antenna are arranged. The housing comprises a cover element designed to transmit electromagnetic waves emitted and/or received by the at least one antenna through the cover element. The cover element is hence supposedly invisible to the electromagnetic waves transmitted and/or received by the radar device. The cover element is typically arranged in front of the antennas and it may be referred to as radar dome or radome. Other parts of the housing may be produced out of plastic or metal, for example, to provide metal cooling fins for a back cover of the housing. The back cover is preferably arranged opposite the cover element. The other parts may be designed to shield or to only partially transmit electromagnetic waves emitted and/or received by the at least one antenna. Hence, a material of the cover element may differ from a material of the other parts of the housing.

A side of the cover element facing away from the at least one antenna typically faces a vehicle component, for example a bumper and/or cladding of the vehicle, if the radar device is arranged in the vehicle. Both the cover element and the vehicle component spatially separate the at least one antenna of the radar device from an environment of the vehicle which is to be monitored by the radar device. As the radar device is typically arranged behind the vehicle component, a shape of the cover element is typically adapted to a shape of a surface of the vehicle component facing the cover element. The surface of the vehicle component is typically curved, so the cover element may be convex in shape. Alternatively, the cover element is flat in shape. No matter the shape of the cover element, there is always at least a small gap between the cover element and at least one antenna of the radar device. Usually, there is also at least a small gap between the cover element and the vehicle component. Due to the gaps, internal reflection of the electromagnetic waves usually occurs, which leads to losses in the radiation pattern of the at least one antenna. Furthermore, there is typically a discontinuity in radiation pattern at edges of the cover element where the cover element adjoins the other parts of the housing. In summary, the gaps as well as the discontinuity result in a degradation of radiation pattern, meaning an intensity of the radiation pattern, meaning an intensity of the transmitted and/or received electromagnetic waves, is decreased compared to an intended radiation pattern. Besides, signal amplitudes and phases may be distorted at the edges. To reduce losses in the radiation pattern of antennas of a radar device, the gaps between the antennas and the cover element should be eliminated.

The inventive radar device comprises at least one antenna element and a cover element. An antenna element in the sense of the invention may be an antenna. For example, the radar device can comprise four transmitting antennas and four receiving antennas. The radar device hence preferably comprises multiple antenna elements. The cover element is designed to transmit electromagnetic waves emitted and/or received by the at least one antenna element through the cover element. In other words, it is designed to allow transmission of the electromagnetic waves relevant to the operation of the radar device. The electromagnetic waves are preferably waves in the radio or microwave domain which are transmitted by the at least one antenna element or received by the at least one antenna element. The cover element may be part of a housing or a complete housing of the radar device.

The at least one antenna element is preferably arranged adjacent to the cover element, wherein at least the cover element spatially separates the at least one antenna element from the environment which is to be monitored by the radar device. This means that the electromagnetic waves transmitted or received by the at least one antenna element always pass through the cover element. The cover element hence faces on one side the at least one antenna element and on an opposite side it at least indirectly faces the environment of the vehicle. Preferably, the radar device is mounted in a vehicle, for example in a front area component of the vehicle, such as the bumper. In other words, the inventive radar device is preferably an automotive radar device.

The at least one antenna element is a planar antenna. In other words, the at least one antenna element is a two-dimensional antenna. The at least one antenna element is hence no three-dimensional antenna such as a waveguide antenna. The at least one antenna element is at least indirectly printed on the cover element. Preferably, the at least one antenna element is directly printed on the cover element. In other words, the at least one antenna element is preferably directly attached to the cover element. There is preferably no additional layer or component between the at least one antenna element and the cover element. The antenna element preferably cannot be removed from the cover element without its destruction. More precisely, the cover element comprises a surface that may be referred to as an internal surface of the cover element. On the internal surface, the at least one antenna element is preferably fixated by printing. In case of in total four transmitting antennas and four receiving antennas, all eight antenna elements are designed as planar antennas and are at least indirectly printed on the cover element.

The at least one antenna element is printed by three-dimensional printing. It is printed of a material designed to conduct the electromagnetic waves. Preferably, the entire at least one antenna element is printed of the material designed to conduct the electromagnetic waves, meaning the conductive material. The material of the antenna is hence any material that can conduct electromagnetic waves. If a substrate is required to be printed along with the at least one antenna element, the material of the substrate has preferably an optimal permittivity for the antenna's radiation pattern. Preferably, the material is metal. Alternatively or additionally, the material is a conductive plastic and/or a plastic with metal content. The printing of the at least one antenna element may be performed by a three-dimensional printer. The printing material used by the three-dimensional printer is the material designed to conduct the electromagnetic waves. The entire at least one printed antenna element is hence conductive.

There is no gap between the at least one antenna element and the cover element, if the at least one antenna element is directly printed on the cover element, because the antenna element is directly attached to the cover element by printing. Even if there are multiple antenna elements, they are all directly attached to the cover element so that all antenna elements are in direct spatial contact with the cover element. Thus, the printing technique can be used to establish direct contact between the at least one antenna element and the cover element. This design reduces the losses in the radiation pattern by avoiding the gaps within the radar device. The arrangement of the at least one antenna element within the radar device is hence optimized.

The radar device is preferably mounted in a vehicle. The vehicle may comprise multiple radar devices. The multiple radar devices can face different parts of an environment of the vehicle, particularly a part of the environment adjacent to at least a part of a front, rear, side, top and/or bottom area of the vehicle. Multiple radar devices can face, for example, the same part of the environment.

According to an embodiment of the invention, the at least one antenna element is a microstrip antenna that is electronically connected to a printed circuit board (PCB). The at least one antenna element is hence preferably no three-dimensional antenna such as a waveguide antenna. The at least one antenna element is particularly a microstrip antenna. The microstrip antenna may be, for example, a patch antenna. The patch antenna typically comprises a microstrip patch as well as a microstrip feed with a port to connect the patch antenna, for example, to a circuity of the PCB. The microstrip antenna may consist of multiple patches in a two-dimensional array. A microstrip antenna is a planar antenna that is relatively easy and fast to fabricate making it a suitable choice for the antenna element. The planar shape of the planar antenna as at least one antenna element preferably results in direct spatial contact between an entire surface of the antenna element and the cover element, if the at least one antenna element is printed directly on the cover element.

A further embodiment comprises that the PCB is printed on the at least one antenna element and/or the cover element, particularly the cover element surrounding the at least one antenna element. In other words, not only the at least one antenna element is printed on the cover element but also the PCB, meaning its substrate, can, for example, be directly attached to the at least one antenna element by printing. The PCB is alternatively or additionally printed directly on the cover element. Particularly, it is directly printed on an interior surface of the cover element that is not covered by the at least one antenna element. Therefore, the radar device is particularly space saving as both the at least one antenna element and the PCB are directly fixated to each other and the cover element by printing.

Besides, an embodiment comprises that all electronic components of the radar device are electronically connected to the PCB. This means that all electronic components are arranged on the PCB. The electronic components may comprise a control unit, such as an electronic control unit (ECU), a radiofrequency (RF) front end and/or other components necessary to operate the radar device. The control unit comprises preferably at least one microprocessor and/or microcontroller. The control unit is preferably configured to evaluate and analyze data representing transmitted and/or received electromagnetic waves provided by the at least one antenna element. The electronic components may be designed as at least one circuitry positioned on the PCB, preferably next to the at least one antenna element. In other words, there can be a complete integration of all electronic components of the radar device into the preferably printed PCB so that a particularly small radar device is provided. The particularly small radar device only comprises the cover element with the at least one printed antenna element and the preferably printed PCB, wherein the PCB comprises all electronic components of the radar device.

According to another embodiment, at least a control unit of the radar device is arranged distanced from the PCB. In this embodiment hence, not all electronic components of the radar device are directly connected to the PCB. A connection element connects the PCB with the at least one antenna element to the control unit. In other words, the connection element connects the PCB, which is attached to the at least one antenna element, to the control unit of the radar device. The control unit is preferably the ECU. That the control unit is arranged distanced from the PCB means that the control unit is spatially separated from the PCB and is not directly positioned on and hence not directly electronically connected to the PCB.

The connection element particularly provides a high-speed connection for data transmittance to the control unit, for example, so that data processing is performable by the control unit. The transmitted data is data collected by the at least one antenna element. The high-speed connection is preferably a wired connection. Alternatively or additionally, the high-speed connection provided by the connection element may be at least partially a wireless connection. The wireless connection may be a wireless local area network (WLAN), a Bluetooth connection and/or a mobile data network. The mobile data network is preferably based on a technology standard for broadband cellular networks, such as long-term evolution (LTE), long-term evolution advanced (LTE-A), fifth generation (5G) or sixth generation (6G). The control unit is configured to evaluate and analyze the data representing transmitted and/or received electromagnetic waves provided by the at least one antenna element.

Alternatively or additionally to the control unit, other electronic components of the radar device may as well be arranged distanced from the PCB. The radar device preferably comprises a second PCB positioned distanced and hence spatially separated from the PCB printed on the at least one antenna element so that, for example, the RF front end or other electronic components of the radar device are electronically connected to the second PCB. It is hence possible to provide a more complex and bigger in size radar device.

A preferred embodiment comprises that the cover element is a radar dome of the radar device. This means, that in this embodiment the at least one antenna element is directly printed on the radar dome. Alternatively, the radar dome can be referred to as radome. The radar dome is always made of a material that allows transmission of electromagnetic waves, meaning in this case radio waves and microwave, through it. The radar dome is a particularly useful cover element for the radar device, as the at least one antenna element can then be integrated into a housing of the radar device, wherein the housing of the radar device typically includes the radar dome on at least one side of the housing.

According to another embodiment, the cover element is a vehicle component of the vehicle. Preferably the vehicle component is a front and/or rear area component of the vehicle. In other words, the vehicle component is preferably an exterior component of the vehicle. In particular, the cover element is a bumper, a side mirror, a pillar and/or a light fixture, for example, a headlamp and/or tail lamp. The cover element, alternatively or additionally, can be integrated into cladding of the vehicle. A side of the vehicle component, on which the at least one antenna element is printed directly, preferably faces an interior of the vehicle when the vehicle component is positioned in its preferred mounting position in the vehicle. There is no radar dome between the at least one antenna element and the component of the vehicle. The vehicle component may be a fascia of the vehicle. The fascia is typically a soft area of a front or a rear of a vehicle. The fascia comprises components arranged at a front end, a rear end, a side, a bottom, and/or a top and hence at a front area, a rear are, a side area, a bottom area and/or a top area of the vehicle. In other words, the cover element is preferably the fascia of the vehicle. The vehicle component can be a decorative component positioned between the radar device and the exterior of the vehicle. The vehicle component can be made of plastic and/or glass. The gap between the radar dome and the vehicle component, meaning the vehicle component, in which or behind which the radar device is positioned, as well as the gap between the at least one antenna element and the radar dome is avoided because the radar dome is replaced by the vehicle component as cover element of the radar device. This is because the at least one antenna element is printed directly on the vehicle component, meaning on the fascia of the vehicle. Hence, no internal reflection of emitted or received electromagnetic waves occurs. Therefore, no losses in the radiation pattern of the at least one antenna element are expected. There are also no discontinuities at the edges of the cover element, because the entire vehicle component of the vehicle represents the cover element so that possible edge structures are spatially distant from the at least one antenna element and thus not relevant for the radiation pattern.

Alternatively or additionally, the radar device can be positioned on an exterior side of the front and/or rear area component. The radar device then faces directly the environment of the vehicle. The at least one antenna element is then printed on the exterior side of the vehicle component. More precisely, the PCB can be printed on the exterior side and the at least one antenna element is printed on the PCB. In other words, the at least one antenna element is printed indirectly on the cover element because the PCB is preferably positioned between the vehicle component as cover element and the at least one antenna element. Preferably, at least the at least one antenna element is painted over for better visual integration into the exterior of the vehicle and/or for protection against dust and fluids, such as water.

In case of the integration in a light fixture, such as the headlamp, the cover element may be a front cover of the light fixture. Preferably, the at least one antenna is printed on an area of the front cover of the light fixture that is not within a path of light emitted by a light source of the light fixture. This means that the radar device is preferably positioned at a side area of the front cover of the light fixture, particularly of the headlamp.

Alternatively or additionally, the radar device may be an interior radar device arranged inside a cabin of the vehicle. The cover element may be an interior component of the vehicle as vehicle component, for example, a holder of an interior mirror, a center console and/or a wall component of the vehicle.

Moreover, an embodiment comprises that the cover element is an adhesive foil. The adhesive foil comprises at least one adhesive surface. The cover element hence comprises an adhesive part provided by the adhesive surface. The at least one antenna element is printed indirectly on the adhesive foil. Preferably, the PCB is arranged on the adhesive foil and the at least one antenna element is printed on the PCB. Preferably, the PCB is printed on a first side of the adhesive foil. The at least one adhesive surface surrounds at least partially the at least one antenna element. The at least one adhesive surface thus preferably surrounds at least partially the PCB with the at least one antenna element. The first side of the adhesive foil hence also comprises the at least one adhesive surface. The adhesive surface can be a part of the first side. The adhesive surface can cover, for example, an edge of the first side of the adhesive foil. The at least one adhesive surface faces in a same direction as the at least one antenna element. Therefore, the radar device can be stuck or glued to the vehicle component of the vehicle by placing the adhesive surface of the adhesive foil on a part of the vehicle component. Preferably, it is stuck or glued to a side of the vehicle component that faces inwards the vehicle, meaning it is not stuck or glued to an exterior side of the vehicle facing the environment of the vehicle. If the adhesive foil is stuck or glued to the vehicle component, the at least one antenna element is in direct contact with the vehicle component and all electromagnetic waves transmitted and/or received by the at least one antenna element pass through the vehicle component. In other words, the at least one antenna element is indirectly printed onto a sticker-like material to be pasted on the fascia, a fascia component or a part of the fascia of the vehicle. The sticker-like material is referred to as adhesive foil. The radar device is hence particularly space saving. It is additionally flexible in its positioning within the vehicle since it can be stuck to any part of vehicle.

According to another embodiment the cover element is as well an adhesive foil. The adhesive foil comprises at least one adhesive surface. The at least one antenna element is printed indirectly on the adhesive foil. Preferably, the PCB is arranged on the adhesive foil and the at least one antenna element is printed on the PCB. Preferably, the PCB is printed on the adhesive foil. Therefore, the at least one antenna element is printed only indirectly on the adhesive foil. The at least one adhesive surface faces away from the at least one antenna element. In other words, the PCB with the at least one antenna element are preferably printed on a first side of the adhesive foil that is opposite a second side of the adhesive foil, wherein the second side comprises the at least one adhesive surface. The adhesive surface can be a part of the second side. The adhesive surface can cover, for example, an edge of the second side of the adhesive foil. Alternatively or additionally, the adhesive surface can cover the entire second side of the adhesive foil. Therefore, the radar device can be stuck or glued to the vehicle component of the vehicle by placing the adhesive surface of the adhesive foil on a part of the vehicle component. Preferably, it is stuck or glued to a side of the vehicle component that faces the exterior of the vehicle, meaning it is preferably stuck or glued to an exterior side of the vehicle facing the environment of the vehicle. If the adhesive foil is stuck or glued to the vehicle component, the at least one antenna element faces away from the vehicle component directly towards the environment of the vehicle. Hence, electromagnetic waves transmitted and/or received by the at least one antenna element do not pass through the vehicle component. Preferably, at least the at least one antenna element is painted over for better visual integration into the exterior of the vehicle and/or for protection against dust and fluids, such as water. In other words, the at least one antenna element is indirectly printed onto a sticker-like material to be pasted on the fascia, a fascia component or a part of the fascia of the vehicle. The sticker-like material is referred to as adhesive foil. The radar device is hence particularly space saving. It is additionally flexible in its positioning within the vehicle since it can be stuck to any part of vehicle.

According to an embodiment, the PCB is printed on the adhesive foil and the at least one antenna element is printed on the PCB. This results in the preferred embodiments for the adhesive foil as cover element as described above.

Another aspect of the invention is concerned with a vehicle. The vehicle may be a motor vehicle, for example, a passenger vehicle, a truck, a bus, a motorcycle and/or a moped. The vehicle comprises a radar device as described above. An embodiment of the inventive radar device as well as a combination of embodiments of the inventive radar device are as well embodiments of the inventive vehicle.

A further aspect of the invention is concerned with a method to produce a radar device for a vehicle. The radar device comprises at least one antenna element and a cover element designed to transmit electromagnetic waves through the cover element, wherein the electromagnetic waves are emitted and/or received by the at least one antenna element. The method comprises printing a planar antenna as the at least one antenna element on the cover element by three-dimensional printing. To provide the printed antenna element a method of three-dimensional printing is used. A printing material used for the three-dimensional printing is a material designed to conduct the electromagnetic waves, meaning the electromagnetic waves emitted and/or received by the at least one antenna element. Preferably, a three-dimensional printer is used to produce the printed at least one antenna element. Preferably, first the cover element itself is produced, for example by injection molding. Afterwards, the at least one antenna element is added to the cover element by being directly or indirectly printed on it. If there are multiple antenna elements, they are preferably all printed on one common side of the cover element by three-dimensional printing. An embodiment of the inventive radar device as well as a combination of the embodiments of the inventive radar device are as well, if applicable, embodiments of the inventive method.

A preferred embodiment of the inventive method comprises printing the at least one antenna element out of metal on the cover element. The conductive material used for printing the at least one antenna element is thus metal. The antenna element is hence no plastic antenna but a metal antenna, such as a microstrip antenna, particularly a patch antenna. Therefore, metal is used as printing material by the three-dimensional printer that is used for the three-dimensional printing of the at least one antenna element. This allows for the integration of a particularly well working antenna element into the radar device.

A further embodiment of the inventive method comprises coating the at least one antenna element printed on the cover element with a substrate by three-dimensional printing. Alternatively or additionally, it comprises coating the cover element surrounding the at least one antenna element with the substrate by three-dimensional printing. The printed substrate forms the PCB to which the at least one antenna element is electronically connected. After, for example, first printing the planar antenna out of metal on the cover element, at least one substrate layer is printed onto the cover element directly so that the substrate layer at least covers the at least one antenna element. Preferably, the at least one antenna element is completely covered by the substrate to provide protection against dust and water. Therefore, continuous and full functionality of the radar device is provided even if the radar device is exposed to dust and/or water. The relative permittivity of the cover element preferably corresponds to a typical relative permittivity of a radar dome.

Thereby show:
- Fig. 1: a schematic representation of a front area of a vehicle with multiple radar devices;
- Fig. 2: a schematic cross section of a radar device;
- Fig. 3: a schematic cross section of a radar device with a spatially distanced control unit;
- Fig. 4: a schematic cross section of a radar device comprising an adhesive foil on an interior side of a vehicle component;
- Fig. 5: a schematic cross section of a radar device comprising an adhesive foil on an exterior side of a vehicle component; and
- Fig. 6: a schematic representation of a method to produce a radar device for a vehicle.

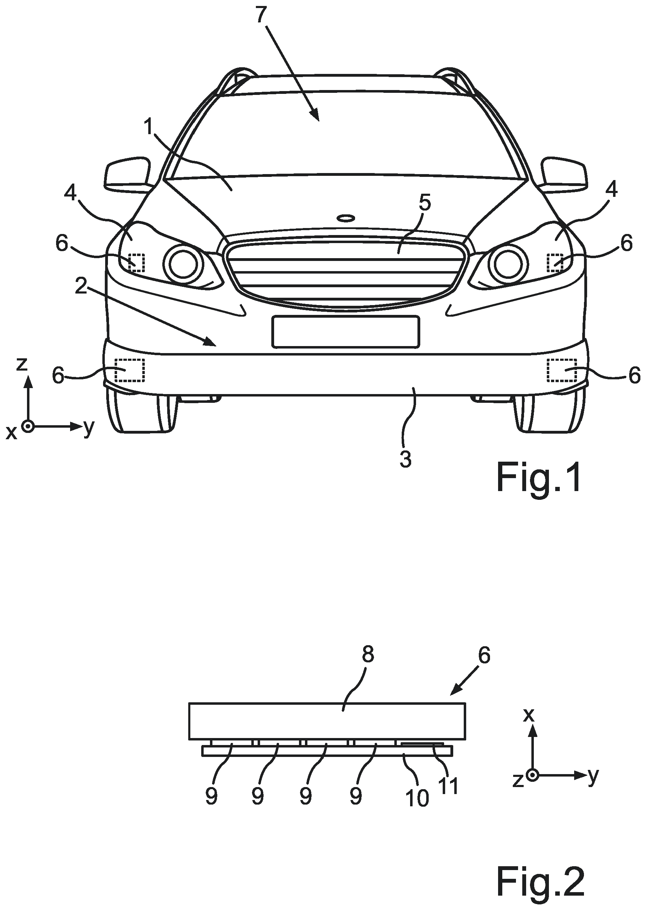

Fig. 1 shows a vehicle 1 with a vehicle component 2. The vehicle component 2 is, for example, a front area component of the vehicle 1 such as a bumper 3, a headlamp 4 or a grill 5 of the vehicle 1. The vehicle component 2 may be a fascia of the vehicle 1. In x-direction behind the bumper 3 and a front cover of the headlamps 4, four radar devices 6 are positioned. The radar devices 6 are hence not visible when looking at an exterior of the vehicle 1 as shown in Fig. 1 because they are positioned behind a front side of the bumper 3 and/or the front cover of the headlamp 4. It is possible that only one pair of radar devices 6 is comprised by the vehicle 1, so that for example the two radar devices 6 behind the bumper 3 or the two radar devices 6 behind the front covers of the two headlamps 4 are sufficient to provide radar monitoring of an environment of the vehicle 1. Preferably, the vehicle 1 comprises additionally or alternatively at least one radar devices 6 in a rear, side and/or top area component of the vehicle 1. Preferably, the radar devices 6, which are positioned behind the front cover of the headlamps 4, are positioned out of a path of light of the light source of the headlamp 4. Alternatively or additionally, the radar device 6 may be integrated into claddings of the vehicle 1. Typically, the radar devices 6 are arranged on outer parts in y-direction of the vehicle component 2 so that they are typically located in a curved area of the vehicle component 2. The radar device 6 may be positioned at any other position in the vehicle component 2 of the vehicle 1. The positions sketched are only examples.

The vehicle 1 also comprises an interior 7, meaning a cabin of the vehicle 1. Within the interior 7, the radar device 6 can alternatively or additionally be arranged (not sketched). Alternatively or additionally, the radar device 6 may be integrated into a rear area component of the vehicle 1, for example a rear bumper 3 and/or a rear light. In general, the radar device 6 is integrated into the vehicle component 2 of the vehicle 1, which is particularly an exterior component of the vehicle 1, more particularly it is the front area component and/or the rear area component.

Fig. 2 shows the radar device 6. The radar device 6 comprises a cover element 8. The cover element 8 is designed to transmit electromagnetic waves emitted and/or received by at least one antenna element 9 through the cover element 8. The cover element 8 can be a radar dome or radome of the radar device 6. Alternatively or additionally, the cover element 8 may be the vehicle component 2 of the vehicle 1, particularly the bumper 3 and/or a front cover of the headlamp 4. The front cover of the headlamp 4 faces the environment of the vehicle 1.

The radar device 6 furthermore comprises the at least one antenna element 9. In this example, four antenna elements 9 are sketched. The number of antenna elements 9 sketched is only an example. The radar device 6 can comprise more or less antenna elements 9. Preferably, the radar device 6 comprises four transmitting antennas as antenna element 9 as well as four receiving antennas as antenna elements 9. The at least one antenna element 9 is a planar antenna. Preferably, the planar antenna as at least one antenna element 9 is a microstrip antenna, particularly a patch antenna. The at least one antenna element 9 is printed on the cover element 8 by three-dimensional printing. Due to the printing of a planar antenna as at least one antenna element 9 on the cover element 8, the entire at least one antenna element 9 is in direct contact with the cover element 8. Particularly, there is no gap between the at least one antenna element 9 and the cover element 8.

The at least one antenna element 9 is electronically connected to a printed circuit board (PCB) 10. The PCB 10 can be as well printed on the other components of the radar device 6. More precisely, the PCB 10 is printed on the at least one antenna element 9. It is also possible that the PCB 10 is printed on the cover element 8 surrounding the at least one antenna element 9, meaning that it is printed on a part of the cover element 8 that surrounds the at least one antenna element 9. Furthermore, electronic components 11 of the radar device 6 are electronically connected to the PCB 10, meaning that they are preferably positioned on the PCB 10. In this example, the electronic components 11 are all necessary electronic components 11 of the radar device 6, for example, an electronic control unit (ECU) and a radio frequency (RF) front end.

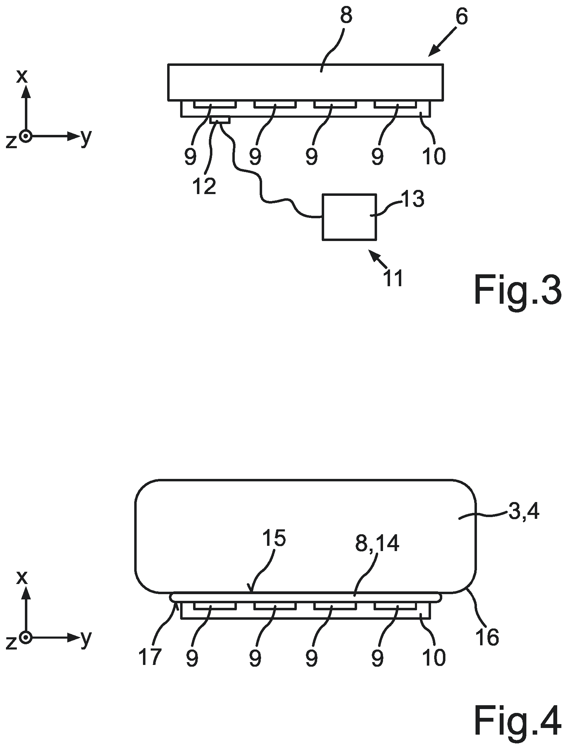

Fig. 3 shows an embodiment in which the PCB 10 is printed on the parts of the cover element 8 that surround the at least one antenna element 9. In this embodiment, the PCB 10 completely embeds at least parts of the antenna elements 9 so that it also protects the at least one antenna element 9 against, for example, water or dust.

Fig. 3 shows furthermore a connection element 12. The connection element 12 connects the PCB 10 together with the at least one antenna element 9 to a control unit 13 of the radar device 6. This means that at least a control unit 13 of the radar device 6, which is one of the electronic components 11 of the radar device 6, is arranged distanced from the PCB 10. The control unit 13 is, for example, the ECU. The connection element 12 provides preferably a high-speed connection for data transmittance from the at least one antenna element 9 to the control unit 13. The control unit 13 preferably comprises a microcontroller and/or a microprocessor.

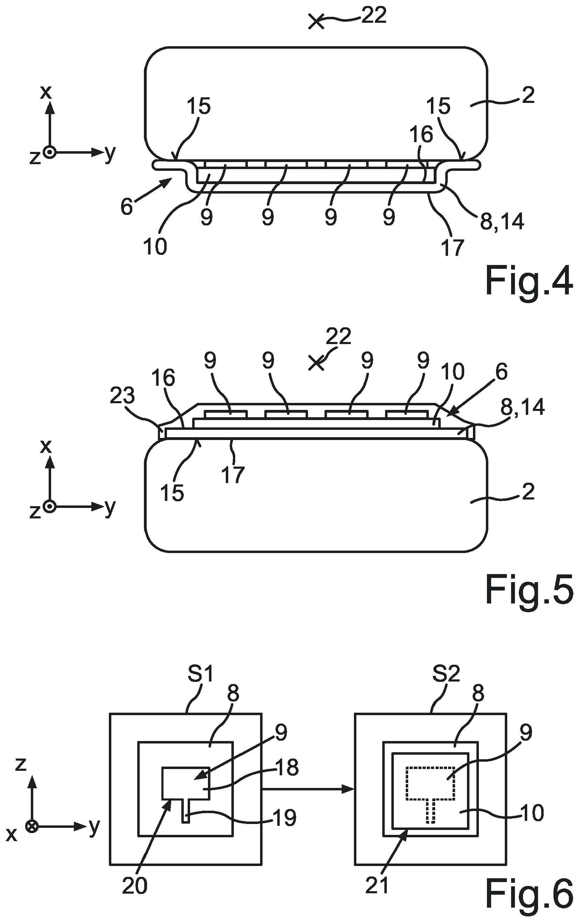

Fig. 4 shows another embodiment of the radar device 6, wherein the cover element 8 is an adhesive foil 14. The adhesive foil 14 comprises at least one adhesive surface 15. The adhesive surface 15 of the adhesive foil 14 may be stuck to or glued to the vehicle component 2, for example the bumper 3 and/or the front cover of the headlamp 4. The at least one antenna element 9 is indirectly printed on the adhesive foil 14. This means that, in this example, the PCB 10 is positioned between the adhesive foil 14 and the at least one antenna element 9. The PCB 10 is here printed on a first side 16 of the adhesive foil 14. The at least one antenna element 9 is then printed on the PCB 10. The at least one adhesive surface 15 surrounds at least partially the at least one antenna element 9, meaning that it surrounds at least partially the PCB 10 with the at least one antenna element 9. The first side 16 of the adhesive foil 14 hence also comprises the adhesive surface 15. The adhesive surface 15 in this example covers edges of the first side 16 of the adhesive foil 14. The adhesive surface 15 faces in a same direction as the at least one antenna element 9. A second side 17 of the adhesive foil 14, which is opposite the first side 16, comprises preferably no adhesive surface 15. An exterior of the vehicle 1 with the vehicle component 2 is marked with a cross 22 in Fig. 4.

Fig. 5 shows a further embodiment of the radar device 6, wherein the cover element 8 is the adhesive foil 14, which comprises at least one adhesive surface 15. The adhesive surface 15 of the adhesive foil 14 may be stuck to or glued to the vehicle component 2, for example the bumper 3 and/or the front cover of the headlamp 4. However in this embodiment, the radar device 6 is positioned on an outer side of the vehicle component 2. The adhesive foil 14 hence faces the exterior of the vehicle 1 with the vehicle component 2, wherein the exterior is marked with the cross 22 in Fig. 5. Here, the PCB 10 is arranged on the first side 16 of the adhesive foil 14, more precisely it is printed on the first side 16, and the at least one antenna element 9 is printed on the PCB 10. The at least one adhesive surface 15 faces away from the at least one antenna element 9. The second side 17 of the adhesive foil 14 hence comprises the at least one adhesive surface 15. The entire second side 17 or only a part of the second side 17 can be the adhesive surface 15. The at least the at least one antenna element is painted over by a layer of paint 23 for better visual integration into the vehicle 1 and/or for protection against dust and fluids, such as water. Here, the layer of paint 23 also covers an edge of the PCB 10 and edges of the first side 16 of the first side 16.

Fig. 6 shows a method to produce the described radar device 6 for the vehicle 1. In a first step S1 at least one planar antenna as at least one antenna element 9 is printed on the cover element 8 by three-dimensional printing. The at least one antenna element 9 is printed of a material designed to conduct electromagnetic waves emitted or received by the at least one antenna element 9. Here, it is printed of metal 20. The at least one antenna element is in this example printed directly on the cover element 8. It is here additionally sketched, that the planar antenna preferably comprises at least one microstrip patch 18 with a microstrip feed 19 to provide, for example, the electronic connection between the at least one antenna element 9 and the PCB 10. In step S1 however, the PCB 10 is not yet printed on the radar device 6.

In a step S2, the at least one antenna element 9 printed on the cover element 8 is coated with a substrate 21 by three-dimensional printing. The substrate 21 forms the PCB 10 to which the at least one antenna element 9 is electronically connected. The at least one antenna element 9, which is here positioned between the PCB 10 and the underlying cover element 8, is sketched with dashed lines because it is completely covered by the PCB 10. Parts of the cover element 8 surrounding the at least one antenna element 9 may as well be coated with the substrate 21 as shown, for example, in Fig. 3 and Fig. 4.

In case the cover element 8 is the adhesive foil 14, the at least one antenna element 9 is indirectly printed on the cover element 8 because first the PCB 10 is printed on the cover element 8 and on top of the PCB 10, the at least one antenna element 9 is printed (not sketched here).

In summary, a three-dimensionally printed patch antenna on the radar dome or the bumper 3 for minimal-loss radiation was disclosed. An automotive radar sensor, meaning the radar device 6, was described, in which metal 20 and substrate layers of the radar antenna, comprising the at least one antenna element 9 as well as the PCB 10, are directly integrated in a vehicle part. They are directly integrated into the cover element 8, for example, the radar dome or the vehicle component 2 or a rear area component. Alternatively or additionally, they may be printed on a sticker-like layer, represented by the adhesive foil 14. Both is performed by the method of three-dimensional printing. This can also be used for a headlamp integration.

For microstrip/ PCB/ patch antennas, meaning the described planar antenna as at least one antenna element 9, the solution is to three-dimensionally print the metal 20 and substrate 21 layers, such as the PCB 10, onto the cover element 8. The cover element 8 may be a radar dome or a radome or the fascia, meaning the vehicle component 2 and/or the rear area component, directly. It can also be printed onto a sticker-like material to be pasted on the fascia, such as the adhesive foil 14 to be stuck to the vehicle component 2. Printing the antennas, meaning the antenna element 9, directly on the vehicle component 2 eliminates at least one of the various barrier stages that the radar signal will encounter. This provides time saving in the integration stage as the radar device will be fitted directly where the antenna element 9 is printed onto the cover element 8. This also allows for a great accuracy in production due to less manual labor.

## Claims

1. A radar device (6) for a vehicle (1) comprising at least one antenna element (9) and a cover element (8) designed to transmit electromagnetic waves emitted and/or received by the at least one antenna element (9) through the cover element (8), **characterized in that**
the at least one antenna element (9) is a planar antenna printed at least indirectly on the cover element (8) by three-dimensional printing, wherein the at least one antenna element (9) is printed of a material designed to conduct the electromagnetic waves.

2. Radar device (6) according to claim 1, **characterized in that** the at least one antenna element (9) is a microstrip antenna that is electronically connected to a printed circuit board (10).

3. Radar device (6) according to claim 2, **characterized in that** the printed circuit board (10) is printed on the at least one antenna element (9) and/or the cover element (8), particularly the cover element (8) surrounding the at least one antenna element (9).

4. Radar device (6) according to claim 2 or 3, **characterized in that** all electronic components (11) of the radar device (6) are electronically connected to the printed circuit board (10).

5. Radar device (6) according to claim 2 or 3, **characterized in that** at least a control unit (13) of the radar device (6) is arranged distanced from the printed circuit board (10), wherein a connection element (12) connects the printed circuit board (10) with the at least one antenna (9) to the control unit (13)

6. Radar device (6) according to any of the preceding claims, **characterized in that** the cover element (8) is a radar dome of the radar device (6).

7. Radar device (6) according to any of the claims 1 or 5, **characterized in that** the cover element (8) is a vehicle component (2) of the vehicle (1), particularly a front area component and/or a rear area component of the vehicle (1).

8. Radar device (6) according to any of the claims 1 to 5, **characterized in that** the cover element (8) is an adhesive foil (14) with a side with an in part adhesive surface (15), wherein the at least one antenna element (9) is indirectly printed on the side of the adhesive foil, wherein the at least one adhesive surface (15) surrounds at least partially the at least one antenna element (9).

9. Radar device (6) according to any of the claims 1 to 5, **characterized in that** the cover element (8) is an adhesive foil (14) with an adhesive surface (15), wherein the at least one antenna element (9) is indirectly printed on the adhesive foil, wherein the at least one adhesive surface (15) faces away from the at least one antenna element (9).

10. Radar device (6) according to claim 8 or 9 in their back reference to any of the claims 2 to 5, wherein the printed circuit board (10) is printed on the adhesive foil (14) and the at least one antenna element (8) is printed on the printed circuit board (10).

11. A vehicle (1) comprising a radar device (6) according to any of the preceding claims.

12. A method to produce a radar device (6) for a vehicle (1), wherein the radar device (6) comprises at least one antenna element (9) and a cover element (8) designed to transmit electromagnetic waves emitted and/or received by the at least one antenna element (9) through the cover element (8),
**characterized in**
printing (S1) a planar antenna as the at least one antenna element (9) at least indirectly on the cover element (8) by three-dimensional printing, wherein the at least one antenna element (9) is printed of a material designed to conduct the electromagnetic waves.

13. Method according to claim 10, **characterized in** printing the at least one antenna element (9) of metal (20) on the cover element (8).

14. Method according to claim 10 or 11, **characterized in** coating (S2) with a substrate (21) the at least one antenna element (9) printed on the cover element (8) and/or the cover element (8), particularly the cover element (8) surrounding the at least one antenna element (9), by three-dimensional printing, wherein the printed substrate (21) forms a printed circuit board (10) to which the at least one antenna element (9) is electronically connected.
